# EUROPÄISCHE PATENTANMELDUNG

(11) **EP 2 651 004 A2**
(43) Veröffentlichungstag der Anmeldung: **16.10.2013**
(21) Anmeldenummer: 13162344.9
(22) Anmeldetag: 04.04.2013
(51) Int. Cl.: H02J 7/00, H02J 7/35

(54) **Mobiles multifunktionales Geräte-Energieversorugnscenter für elektrische Vorrichtungen aufweisende Geräte**

(30) Priorität: 11.04.2012 DE 202012101295 U
(71) Anmelder: Haas, Michael, 72469 Meßstetten (DE)
(72) Erfinder: Haas, Michael, 72469 Meßstetten (DE)
(74) Vertreter: Klocke, Peter

(57) **Zusammenfassung**

Mobiles Geräte-Energieversorgungscenter (1) zur witterungsgeschützten Aufnahme von elektrische Vorrichtungen aufweisenden Geräten und deren Zubehör im Freien, mit einem Gehäuse (2), das einen von einer Bodenplatte (3), Seitenwänden (4, 4', 4") und einer Deckenplatte (5) begrenzten Innenraum (6) aufweist, in dem Halterungen (7) und/oder Ablagen (8) für die Geräte nebst Zubehör angeordnet sind, wobei mindestens eines Seitenwand (4, 4', 4") und/oder die Deckenplatte (5) für den Zugang zu dem Innenraum (6) von dem Gehäuse (2) abnehmbar, wegschwenkbar und/oder gegenüber dem Gehäuse (2) verschiebbar ist. Erfindungsgemäß sind in dem Gehäuse (2) elektrische Einrichtungen (9, 10, 11, 9', 10', 11') zur Umwandlung, Speicherung und Bereitstellung von elektrischer Energie für die elektrische Vorrichtungen der Geräte und/oder deren Zubehör angeordnet und/oder anordenbar sind.

## Beschreibung

Die Erfindung betrifft ein mobiles Geräte-Energieversorgungscenter zur Aufnahme von elektrische Vorrichtungen aufweisenden Geräten und deren Zubehör, mit einem Gehäuse, das einen von einer Bodenplatte, Seitenwänden und einer Deckenplatte begrenzten Innenraum aufweist, in dem Halterungen und/oder Ablagen für die Geräte nebst Zubehör angeordnet sind. Dabei ist mindestens eine Seitenwand und/oder die Deckenplatte für den Zugang zu den Innenraum des Geräte-Energieversorgungscenters von dem Gehäuse abnehmbar, verschiebbar oder wegschwenkbar.

In Kleingärten beispielsweise werden Gartengerätschaften und Ähnliches üblicherweise in Gartenhäusern oder Gartenboxen aufbewahrt. Häufig findet man in solchen Gärten Hecken, Zierpflanzen und Rasenflächen, die in der Regel eine sehr intensive Pflege benötigen. Zur Pflege erfreuen sich motorangetriebene Maschinen und Geräte wachsender Beliebtheit. Der Antrieb solcher Hilfsmittel erfolgt normalerweise mittels Verbrennungs- oder Elektromotoren. Natur- und Umweltschutz spielen bei Kleingärten meist eine wichtige Rolle, so dass ein Großteil der Kleingärtner schwerpunktmäßig Elektrogeräte benutzt. Elektrogartengeräte, wie beispielsweise Rasenmäher, Häcksler, Heckenscheren, Fadenschneider oder Sensen werden heutzutage durch eine direkte Verbindung mit einem lokalen Stromnetz oder von Akkumulatoren mit Strom versorgt. Der Einsatz von Geräten, die eine direkte Verbindung zu einem Stromnetz benötigen, ist durch das nicht überall verfügbare Stromnetz begrenzt. Zudem ist deren Nutzung und Handhabung durch das elektrische Verbindungskabel oftmals behindert. Außerdem stellt das Verbindungskabel bei vielen Geräten einen signifikanten Risikofaktor dar, da es bei der Arbeit beschädigt werden kann, so dass schwerwiegende Verletzungen des Benutzers nicht ausgeschlossen sind.

Die Verwendung von Elektrogartengeräten mit Akkumulatorenstromversorgung ist einfacher und sicherer. Ein mit der Akkumulatorenstromversorgung verknüpfter Nachteil liegt jedoch darin, dass sich die Akkumulatoren mit der Lagerung und der Verwendung der Elektrogartengeräte entladen und periodisch wieder aufgeladen werden müssen. Besonders wichtig ist es in diesem Zusammenhang, dass zu Beginn der Nutzung eines derartigen Elektrogartengerätes die Akkumulatoren vollständig aufgeladen sind, um einen möglichst langen Betrieb ohne Pause sicherzustellen. Ein großes Problem von Elektrogartengeräten mit fest eingebauten oder austauschbaren Akkumulatoren besteht darin, dass sich die Akkumulatoren immer dann deutlich selbst entladen, wenn sie über eine ausgedehnte Zeitspanne gelagert werden, auch wenn sie zuvor vollständig aufgeladen wurden.

Der Erfindung liegt die Aufgabe zugrunde, eine Möglichkeit vorzuschlagen, die Akkumulatoren von elektrische Vorrichtungen aufweisenden Geräten bei der witterungsgeschützten Lagerung in einer mobilen Box aufzuladen und/oder dem Ladezustand der Akkumulatoren über einen langen Zeitraum aufrechtzuerhalten. Dabei soll die Box als mobiles Geräte-Energieversorgungscenter netzunabhängig sein.

Diese Aufgabe wird erfindungsgemäß durch ein mobiles Geräte-Energieversorgungscenter mit den Merkmalen des Anspruchs 1 gelöst. Weitere vorteilhafte Ausgestaltungen sind den rückbezogenen Ansprüchen zu entnehmen.

Das vorgeschlagene mobile Geräte-Energieversorgungscenter, zur Aufnahme von mindestens eine elektrische Vorrichtung aufweisenden Geräten und deren Zubehör, weist ein boxenartiges Gehäuse mit einer Bodenplatte, Seitenwänden und einer Deckenplatte auf, die einen Innenraum des Gehäuses begrenzen. Erfindungsgemäß sind in dem Gehäuse elektrische Einrichtungen zur Umwandlung, Speicherung und Bereitstellung von elektrischer Energie für die elektrischen Vorrichtungen der Geräte und/oder deren Zubehör angeordnet. In dem Innenraum des Gehäuses sind auch Halterungen und/oder Ablagen für die Geräte nebst Zubehör angeordnet, wobei mindestens eine Seitenwand und/oder die Deckenplatte für den Zugang zu dem Gehäuse von dem Gehäuse abnehmbar, wegschwenkbar und/oder gegenüber dem Gehäuse verschiebbar ist. Bei den Geräten nebst Zubehör kann es sich beispielsweise um Gartengeräte, Werkzeuge, Maschinen, Fahrräder oder dergleichen mit elektrischen Vorrichtungen handeln, die im Freien witterungsgeschützt aufbewahrt und betriebsbereit gehalten werden sollen.

Die in dem Gehäuse angeordneten elektrischen Einrichtungen umfassen mindestens einen Laderegler, eine Akkumulatoren-Zelle, einen Wechselrichter für 230 Volt und eine Ausgangssteckdose, die in dieser Reihenfolge miteinander verschaltet sind. Der Laderegler ist mit einer außerhalb des Gehäuses angeordneten Spannungsquelle verbindbar oder verbunden. Er regelt den Ladestrom zu der mindestens einen Akkumulatoren-Zelle und verhindert eine Überladung bzw. eine Tiefentladung der Akkumulatoren, und damit deren Beschädigung. Die externe Spannungsquelle ist vorzugsweise eine Niederspannungsquelle, die eine Gleichspannung von 12 Volt liefert. Sie kann an der Außenseite des Gehäuses angeordnet und mit dem Gehäuse fest oder beweglich verbunden sein. Alternativ kann auch eine abgesetzt vorhandene Niederspannungsquelle verwendet werden. Das Gehäuse des mobilen Geräte-Energieversorgungscenters ist in der Größe und dem Gewicht günstigerweise derart ausgebildet, dass es ohne darin angeordnete Geräte oder deren Zubehör von maximal zwei Personen bewegbar ist. Zur Vereinfachung des Transportes kann das Gehäuse auch ein oder mehrere Räder aufweisen oder auf einem Fahrgestell angeordnet sein. Das mobile Geräte-Energieversorgungscenter kann damit besonders einfach zwischen verschiedenen Standorten und temporären Arbeitsstellen hin- und herbewegt werden. Aufgrund seines leicht handhabbaren Gewichtes kann es problemlos auf einen Fahrzeuganhänger bzw. auf eine Fahrzeugladefläche verladen, dort einfach gesichert und so über größere Entfernungen sicher transportiert werden. Prinzipiell ist ein derartiges mobiles Geräte-Energieversorgungscenter an jedem beliebigen Platz im Freien nutzbar. Es kann sowohl auf dem Erdboden abgesetzt wie auch auf einem Fahrzeug oder Fahrzeuganhänger befindlich genutzt werden.

Vorzugsweise ist die Spannungsquelle zur Speisung der in dem Gehäuse angeordneten elektrischen Einrichtungen ein Solargenerator und/oder ein Windgenerator, der außen an dem Gehäuse angeordnet ist, regenerative Energie aufnimmt und elektrisch Energie an die elektrischen Einrichtungen im Innern des Gehäuses abgibt. Damit ist das mobile Geräte-Energieversorgungscenter autark nutzbar und besonders umweltfreundlich. Es kann an jeder beliebigen Stelle beispielsweise eines Gartens oder eines Hofes aufgestellt werden, an der ausreichend Solar- bzw. Windenergie zur Verfügung steht. Dabei ist darauf zu achten, dass der Solargenerator in Richtung Süden ausgerichtet ist. Eine Ausrichtung des Windgenerators ist in der Regel nicht notwendig, da dieser meist selbstausrichtend ist.

Bei einer bevorzugten Ausführungsform der Erfindung wird Sonnenenergie in elektrische Energie umgewandelt. Dazu wird ein Solargenerator verwendet, der mindestens Photovoltaik-Modul aufweist, das vorzugsweise an der Deckenplatte außen angeordnet ist. Der Solargenerator liefert eine 12-Volt-Spannung, so dass zur Speicherung handelsübliche 12-Volt-Akkumulatoren geeigneter Kapazität ohne großen zusätzlichen Schaltungsaufwand eingesetzt werden können.

Bei einer vorteilhaften Ausführungsform des erfindungsgemäßen Geräte-Energieversorgungscenters umfassen die elektrischen Einrichtungen einen Laderegler, eine oder mehrere Akkumulatoren-Zellen und mindestens einen Wechselrichter, die zum stationären Gebrauch fest in das Gehäuse eingebaut sind. Diese sind derart angeordnet, dass sie nicht beim Verstauen oder Entnehmen der elektrische Vorrichtungen aufweisenden Geräte oder deren Zubehör hinderlich sind und dass der Zugang zu den Halterungen und/oder den Ablagen für die Geräte nebst Zubehör problemlos möglich ist. Es werden handelsübliche Wechselrichter mit einer typischen Leistung zwischen 300 Watt und 1000 Watt verwendet, die üblicherweise mit einer 230-Volt-Steckdose ausgestattet sind. An diese Steckdose kann zum Beispiel ein Elektrogartengerät oder ein Zubehörteil, beispielsweise eine Ladestation für ein Akku-Pack direkt angeschlossen werden, oder über eine mit der Steckdose verbundene Mehrfachsteckdosenleiste mehrere derartige Geräte bzw. Zubehörteile gleichzeitig. Dabei wird der Ladestrom für die Geräte bzw. deren Zubehör den Akkumulatoren-Zellen entnommen, so dass eine Aufladung der Akkumulatoren von elektrischen Geräten auch dann sichergestellt ist, wenn der Solar- bzw. Windgenerator momentan keine oder zu wenig Energie liefert. Anstelle eines einzigen Wechselrichters können natürlich auch mehrere Wechselrichter von den Akkumulatoren-Zellen versorgt werden.

Bei einer zweckmäßigen Ausführungsform der Erfindung sind die elektrischen Einrichtungen, eine oder mehrere Akkumulatoren-Zellen und mindestens einen Wechselrichter umfassen, nicht fest in das Gehäuse als stationäre Energieversorgungsstation eingebaut. Stattdessen sind sie zum mobilen Gebrauch in eine aus dem Gehäuse entnehmbare Box untergebracht. Die Box bildet zusammen mit den eingebauten elektrischen Einrichtungen eine universal und autark verwendbare mobile Energieversorgungsstation. Die Energieversorgungsstation benötigt für die Akkumulatoren-Zellen einen Laderegler. Dabei ist es nicht zwingend notwendig, dass der Laderegler in die Box eingebaut ist, sondern er kann auch ortsfest in dem Gehäuse angeordnet sein.

Die mobile Energieversorgungsstation kann einfach aus dem Gehäuse entnommen werden, da sie über eine Steckverbindung mit dem Solargenerator und/oder dem Windgenerator verbunden ist. Sie weist vorzugsweise einen Tragegriff auf, mit dem sie bequem zum jeweiligen Einsatzort mitgenommen werden kann. Sie ist insbesondere dafür vorgesehen, an Netzspannung zu betreibende Geräte mit Strom zu versorgen, ohne dass ein langes Verlängerungskabel benutzt werden muss oder dass das deutlich unhandlichere mobile Geräte-Energieversorgungscenter versetzt werden muss. Die Leistung des mindestens einen integrierten Wechselrichters ist derart bemessen, dass Elektrogartengeräte, mit einer Leistungsaufnahme bis zu 1000 Watt daran über eine längere Zeitdauer betrieben werden können. Die Zeitdauer ist abhängig von der Größe des mindestens einen eingebauten Akkumulators. Diese ist derart gewählt, dass bei voll geladenem Akkumulator und bei maximaler Leistungsabgabe des Wechselrichters eine Betriebszeit von einer Stunde erreicht wird, ohne die Energieversorgungsstation erneut im mobilen Geräte-Energieversorgungscenter aufladen zu müssen. 12-Volt-Akkumulatoren mit einer Leistung von etwa 85 Ah sind dafür ausreichend. Natürlich kann die mobile Energieversorgungs-station wie auch die stationäre Energieversorgungsstation nicht nur zum Betrieb bzw. zum Aufladen von Elektrogartengeräten verwendet werden. Es können beispielsweise auch Kaffeemaschinen, Babyflaschenwärmer, Kühlboxen, Staubsauger, Radiogeräte, Bohrmaschinen, Ladegeräte für Akku-Packs und dgl. abgeschlossen werden.

Bei einer bevorzugten Variante der Erfindung weisen die elektrischen Einrichtungen der mindestens einen integrierten oder mobilen Energieversorgungsstation zwischen den Akkumulator-Zellen und dem mindestens einen Wechselrichter eine Zeitschaltuhr oder ein Schalter gesteuertes Zeitrelais mit Ausschaltverzögerung auf. Die Zeitschaltuhr ist vorzugsweise derart programmiert, dass sie den mindestens einen elektrischen Wechselrichter täglich etwa 2 Stunden mit den Akkumulatoren-Zellen verbindet, so dass die Akku-Packs von Geräten über die Energieversorgungsstation jeweils kurzzeitig zur Ladungserhaltung neu aufgeladen werden. Das Schalter gesteuerte Zeitrelais mit wählbarer Ausschaltverzögerung wird beim Öffnen des Gehäuses des Geräte-Energieversorgungscenters durch einen Schalter automatisch gestartet, so dass der Wechselrichter unverzüglich in Betrieb genommen wird. Die stationäre und/oder mobile Energieversorgungsstation ist somit zur Energieabgabe bereit, bis das Zeitrelais typisch nach einigen Stunden abschaltet. Der Schalter kann dabei von der abnehmbaren, verschiebbaren bzw. verschwenkbaren Seitenwand und/oder Deckenplatte des Gehäuses betätigt werden. Als Schalter können nicht nur rein mechanisch wirkende Schalter, sondern auch elektronische Schalter wie beispielsweise Näherungsschalter oder Lichtschranken benutzt werden.

Vorzugsweise ist dabei zwischen den Akkumulatoren-Zellen und dem Wechselrichter ein elektrischer Thermostat angeordnet. Dieser kann den Akkumulatoren-Zellen direkt nachgeschaltet oder zwischen der Zeitschaltuhr bzw. dem Zeitrelais und dem Wechselrichter eingeschleift sein. Der Thermostat ist derart konfiguriert, dass er den Strompfad zu der Zeitschaltuhr bzw. dem Zeitrelais und damit zu dem mindestens einen Wechselrichter bei tiefen Temperaturen unterbricht. Der Thermostat schaltet typisch zwischen 0° und 5° Celsius. Damit wird verhindert, dass beispielsweise an die mindestens eine Energieversorgungsstation angeschlossene aufladbare Elektrogeräte bzw. deren Ladestationen mit darin befindlichen Akku-Packs die Akkumulatoren-Zellen der Energieversorgungsstation beim Aufladen tiefentladen, wenn im Winter kein oder nur ein geringer Ladestrom für die Akkumulatoren-Zellen der Energieversorgungsstation zur Verfügung steht.

Vorzugsweise wird ein elektronischer Schalter in Form eines Bewegungsmelders verwendet, der in dem Gehäuse angeordnet ist. Beim Öffnen des Gehäuses detektiert dieser die öffnende Person und startet daraufhin das Zeitrelais.

Gemäß einer zweckmäßigen Ausführungsform des mobilen Geräte-Energieversorgungscenters weisen die elektrischen Einrichtungen der stationären oder der mobilen Energieversorgungsstation mehrere Anschlusssteckdosen auf, die mit dem mindestens einen jeweiligen Wechselrichter verbunden sind. Auf diese Weise können daran gleichzeitig mehrere Geräte aufgeladen bzw. betrieben werden.

Zusätzlich kann vor den elektrischen Einrichtungen der mindestens einen Energieversorgungsstation auch eine 12-Volt-Anschlusssteckdose für eine externe Ladestromversorgung der integrierten Akkumulatoren angeordnet sein. So können die Akkumulatoren der stationären Energieversorgungsstation und/oder der mobilen Energieversorgungsstation beispielsweise über den Zigarettenanzünder eines Fahrzeugs aufgeladen werden, falls regenerative Energien für den Betrieb des Solar- oder des Windgenerators temporär nicht oder nicht im ausreichenden Maße zur Verfügung stehen.

Bevorzugt wird eine Ausführungsform der Erfindung bei der die Deckenplatte an das Gehäuse angelenkt ist und bei der vorzugsweise die der Schwenkachse ferne, sich parallel zur Schwenkachse erstreckende Seitenwand zusammen mit der Deckenplatte nach oben in mindestens eine stabile Lage schwenkbar ist. Damit wird das Gehäuse des Geräte-Energieversorgungscenters gleichzeitig oben und seitlich geöffnet, so dass ein mehrfacher Zugang zu dem Innenraum vorhanden ist. Von oben können insbesondere die Ablagen des Gehäuses sowie die an der Deckenplatte oder den Seitenwänden innen vorgesehenen Halterungen und von seitlich die Bodenplatte einfach erreicht werden. Zudem können dadurch die elektrischen Einrichtungen der fest installierten Energieversorgungsstation bzw. der entnehmbaren Energieversorgungsstation besonders einfach bedient werden. Über die offene Seitenwand kann beispielsweise ein elektrischer Rasenmäher in den oder aus dem Innenraum geschoben werden oder die Energieversorgungsstation in dem Innenraum gebracht oder aus diesem entnommen werden, ohne die Energieversorgungsstation hoch anheben zu müssen. Für die stabile Lage der offenen Deckenplatte mit der daran befestigten Seitenwand sind geeignete Mittel, beispielsweise mindestens ein Stützstab oder eine Gasdruckfeder vorgesehen.

Vorzugsweise bildet die Deckenplatte ein Dach für das Gehäuse des mobilen Geräte-Energieversorgungscenters. Dazu ist die Deckplatte gegenüber der

Bodenplatte geneigt angeordnet. Dies ist besonders dann von Vorteil, wenn die elektrischen Einrichtungen im Innern des Gehäuses von einem Solargenerator mit elektrischer Energie versorgt werden. Durch die Neigung der Deckenplatte wird der Wirkungsgrad des mindestens einen vorzugsweise verwendeten Photovoltaik-Moduls verbessert, indem die Sonnenstrahlen auf das Photovoltaik-Modul steiler auftreffen.

Günstigerweise ist die geneigte Deckenplatte vorzugsweise derart an das Gehäuse des Geräte-Energieversorgungscenters angelenkt, dass sich die Neigung der Deckenplatte beim Öffnen des Gehäuses vergrößert. Mit zunehmender Neigung der Deckenplatte wird das außen an der Deckenplatte angebrachte Photovoltaik-Modul weiter aufgerichtet, so dass die Sonnenstrahlen das Photovoltaik-Modul annähernd senkrecht mit Sonnenlicht beaufschlagen. Damit wird ein maximaler Ladestrom für die Akkumulatoren-Zellen der mindestens einen stationären und/oder mobilen Energieversorgungsstation bei geöffneter Deckenplatte bereitgestellt.

Vorzugsweise weist die Bodenplatte erfindungsgemäß eine Rampe auf, die in dem Innenraum vor derjenigen Seitenwand angeordnet ist, an der die geneigte Deckenplatte den geringsten Abstand gegenüber der Bodenplatte besitzt. Dies ist insbesondere dann von Nutzen, wenn beispielsweise ein Rasenmäher in dem Gehäuse untergebracht werden soll. Beim Erreichen der Rampe werden die Vorderräder des Rasenmähers angehoben und gleichzeitig der Handgriff zum Führen des Rasenmähers hinten abgesenkt. Damit kann das Gehäuse des mobilen Geräte-Energieversorgungscenters in der Höhe niedriger gehalten werden.

Es hat sich als vorteilhaft erwiesen, die abnehmbare, verschiebbare oder verschwenkbare Seitenwand bzw. Deckenplatte mit dem Gehäuse verriegelbar und abschließbar auszuführen. Damit wird nicht nur ein sicherer Schutz vor Umwelteinflüssen bewirkt, sondern auch ein sicherer Schutz vor Diebstahl erreicht. Zur Verriegelung bzw. zum Abschließen können alle dem Fachmann bekannten Einrichtungen und Verfahren verwendet werden.

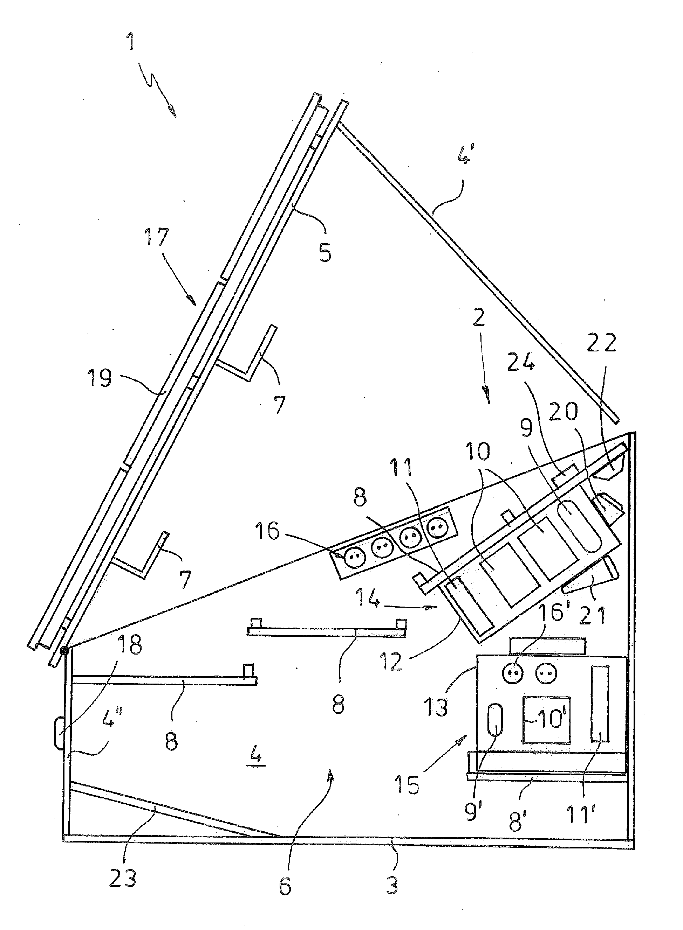

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Die einzige Figur zeigt ein erfindungsgemäßes mobiles Geräte-Energieversorgungscenter ohne Geräte und/oder deren Zubehör in einer schematischen Längsschnittdarstellung.

Die Figur zeigt ein Ausführungsbeispiel eines erfindungsgemäßen elektrische Vorrichtungen aufweisenden mobile Geräte-Energieversorgungscenters 1 zur Aufnahme von in der Zeichnung nicht dargestellten Geräten und deren Zubehör, mit einem Gehäuse 2, das einen von einer Bodenplatte 3, von Seitenwänden 4, 4', 4" und einer Deckenplatte 5 begrenzten Innenraum 6 aufweist, in dem Halterungen 7 und/oder Ablagen 8 für die Geräte nebst Zubehör angeordnet sind. Bei dem dargestellten Ausführungsbeispiel ist die Deckenplatte 5 an das Gehäuse 2 angelenkt und die Seitenwand 4' zusammen mit der Deckenplatte 5 nach oben in eine stabile Lage schwenkbar. Die einzige Figur zeigt das Gehäuse 2 mit geöffneter Deckenplatte 5 und geöffneter Seitenwand 4'. Die Seitenwände 4, 4' sind bei geschlossenem Innenraum 6 alle senkrecht zu der Bodenplatte 3 angeordnet, während die Deckenplatte 5 in diesem Zustand pultförmig geneigt ist. In dem Innenraum 6 sind elektrische Einrichtungen 9, 10, 11 und 9', 10', 11' angeordnet, die zur Umwandlung, Speicherung und Bereitstellung von elektrischer Energie für die Geräte mit elektrischen Vorrichtungen und/oder deren Zubehör vorgesehen sind.

Bei den elektrischen Einrichtungen handelt es sich jeweils um Laderegler 9, 9', Akkumulatoren-Zellen 10, 10' und Wechselrichter 11, 11', wobei der Laderegler 9, die Akkumulatorenzellen 10 und der Wechselrichter 11 in einem fest mit dem Gehäuse 2 verbundenen Kasten 12 und der Laderegler 9', die Akkumulatoren-Zellen 10' und der Wechselrichter 11' in einer mobilen Box 13 angeordnet sind. Der Kasten 12 bildet mit dem darin angeordneten elektrischen Einrichtungen 9, 10, 11 eine ortsfeste Energieversorgungsstation, die Box 13 mit ihren elektrischen Einrichtungen 9', 10', 11' eine mobile Energieversorgungsstation. Die stationäre Energieversorgungsstation 14 weist mehrere Anschlusssteckdosen 16, die mobile aus dem Gehäuse 2 entnehmbare Energieversorgungsstation 15 mehrere Anschlusssteckdosen 16' auf, an die in der Zeichnung nicht dargestellte elektrische Verbraucher anschließbar sind. In der Figur sind sämtliche elektrischen Verbindungsleitungen nicht dargestellt, um die Übersichtlichkeit der Zeichnung zu verbessern.

Zum Aufladen der Akkumulatoren-Zellen 10, 10' ist außen an dem Gehäuse 2 ein Solargenerator 17 angeordnet, der regenerative Sonnenergie aufnimmt und elektrische Energie an die elektrischen Einrichtungen 9, 10, 11, 9', 10', 11' im innern des Gehäuses 2 abgibt. Alternativ oder zusätzlich kann an die Energieversorgungsstation 14 und/oder die Energieversorgungsstation 15 auch eine in der Zeichnung nicht gezeigte externe Spannungsquelle über eine 12 Volt-Anschlusssteckdose 18 angeschlossen werden, um die Akkumulatoren-Zellen 10, 10' aufzuladen. Der Solargenerator 17 weist drei miteinander verschaltete Photovoltaik-Module 19 auf, die außen an der Deckenplatte 5 des Gehäuses 2 angeordnet sind.

Bei der integrierten fest mit dem Gehäuse 2 verbundenen Energieversorgungsstation 14 sind zwischen den Akkumulatoren-Zellen 10 und dem mindestens einen Wechselrichter 11 eine programmierbare Zeitschaltuhr 20 und ein Schalter 21 gesteuertes Zeitrelais 22 mit wählbarer Ausschaltverzögerung angeordnet. Die Zeitschaltuhr 20 und das Zeitrelais 22 sind parallel geschaltet und aktivieren den Wechselrichter 11 temporär über einen schaltbaren Ausgang. Bei dem dargestellten Ausführungsbeispiel handelt es sich bei dem Schalter 21 um einen in dem Gehäuse 2 angeordneten Bewegungsmelder, der durch Öffnen des Gehäuses aktivierbar ist und schaltet. Zwischen den Akkumulatoren-Zellen 10 und der Zeitschaltuhr 20 bzw. dem Zeitrelais 22 ist ein elektrischer Thermostat 24 angeordnet, der die Stromzufuhr zu dem Wechselrichter 11 bei tiefen Temperaturen, d. h beim Annähern der Außentemperaturen an 0° Celsius unterbricht.

Bei dem Gehäuse 2 ist die Deckenplatte 5 derart geneigt angeordnet und angelenkt, dass sich die Neigung der Deckenplatte 5 gegenüber dem Gehäuse 2 und damit des Photovoltaik-Moduls 19 beim Öffnen des Gehäuses 2 vergrößert. Damit ist die der öffenbaren Seitenwand 4' gegenüberliegende feste Seitenwand 4" in der Höhe niedriger ausgebildet als die Seitenwand 4'. Vor der festen Seitenwand 4" ist an der Bodenplatte 3 eine Rampe 23 in dem Innenraum 6 angeordnet, die einen in dem Innenraum 6 befindlichen, in der Zeichnung nicht dargestellten Rasenmäher vorne anhebt. Die öffenbare Seitenwand 4' und Deckenplatte 5 sind mit dem Gehäuse 2 verriegelbar und abschließbar. Die Bodenplatte 3 des Gehäuses 2 weist Räder 25 zum einfacheren Bewegen des mobilen Geräte-Energieversorgungscenters 1 an einem Ende und Standfüße 26 am anderen Ende auf.

## Patentansprüche

1. Mobiles Geräte-Energieversorgungscenter (1) zur witterungsgeschützten Aufnahme von elektrische Vorrichtungen aufweisenden Geräten und deren Zubehör im Freien, mit einem Gehäuse (2), das einen von einer Bodenplatte (3), Seitenwänden (4, 4', 4") und einer Deckenplatte (5) begrenzten Innenraum (6) aufweist, in dem Halterungen (7) und/oder Ablagen (8) für die Geräte nebst Zubehör angeordnet sind, wobei mindestens eines Seitenwand (4, 4', 4") und/oder die Deckenplatte (5) für den Zugang zu dem Innenraum (6) von dem Gehäuse (2) abnehmbar, wegschwenkbar und/oder gegenüber dem Gehäuse (2) verschiebbar ist, **dadurch gekennzeichnet, dass** in dem Gehäuse (2) elektrische Einrichtungen (9, 10, 11, 9', 10', 11') zur Umwandlung, Speicherung und Bereitstellung von elektrischer Energie für die elektrische Vorrichtungen der Geräte und/oder deren Zubehör angeordnet und/oder anordenbar sind.

2. Mobiles Geräte-Energieversorgungscenter nach Anspruch 1, **dadurch gekennzeichnet, dass** an dem Gehäuse (2) ein Solargenerator und/oder ein Windgenerator (17) angeordnet ist, der regenerative Energie aufnimmt und elektrische Energie an die elektrischen Einrichtungen (9, 10, 11, 9', 10', 11') im Innern des Gehäuses (2) abgibt.

3. Mobiles -Geräte-Energieversorgungscenter nach Anspruch 1 oder 2, **dadurch gekennzeichnet, dass** der Solargenerator (17) mindestens ein Photovoltaik-Modul (19) aufweist, das vorzugsweise an der Deckenplatte (5) außen angeordnet ist.

4. Mobiles Geräte-Energieversorgungscenter nach einem der vorstehenden Ansprüche, **dadurch gekennzeichnet, dass** die elektrischen Einrichtungen mindestens einen Laderegler (9), wenigstens eine Akkumulatoren-Zelle (10) und mindestens einen Wechselrichter (11) aufweisen, die als integrierte stationäre Energieversorgungsstation (14) fest in das Gehäuse (2) und/oder als mobile Energieversorgungsstation (15) in einer aus dem Gehäuse (2) entnehmbaren Box (13) eingebaut sind.

5. Mobiles Geräte-Energieversorgungscenter nach Anspruch 4, **dadurch gekennzeichnet, dass** die elektrischen Einrichtungen (9, 10, 11) der integrierten stationären Energieversorgungsstation (14) und/oder der mobilen Energieversorgungsstation (15) zwischen den Akkumulatoren-Zellen (10) und dem mindestens einem Wechselrichter (11) eine programmierbare Zeitschaltuhr (20) und/oder ein Schalter (21) gesteuertes Zeitrelais (22) mit wählbarer Ausschaltverzögerung aufweisen, wobei zwischen den Akkumulatoren-Zellen (10) und dem mindestens einen Wechselrichter (11) vorzugsweise ein elektrischer Thermostat (24) angeordnet ist.

6. Mobiles Geräte-Energieversorgungscenter nach Anspruch 5, **dadurch gekennzeichnet, dass** der Schalter (21) ein in dem Gehäuse (2) angeordneter Bewegungsmelder ist, der vorzugsweise durch Öffnen des Gehäuses (2) aktivierbar ist und schaltet.

7. Mobiles Geräte-Energieversorgungscenter nach einem der vorstehenden Ansprüche 4 bis 6, **dadurch gekennzeichnet, dass** die elektrischen Einrichtungen (9, 10, 11, 9', 10', 11') der stationären Energieversorgungsstation (14) und/oder der mobilen Energieversorgungs-Station (15) mehrere Anschlusssteckdosen (16, 16') aufweisen, die mit dem mindestens einen jeweiligen Wechselrichter (11, 11') verbunden sind.

8. Mobiles Geräte-Energieversorgungscenter nach einem der vorstehenden Ansprüche, **dadurch gekennzeichnet, dass** vor den elektrischen Einrichtungen (9, 10, 11, 9', 10', 11') eine 12 Volt-Anschlusssteckdose (18) für eine externe Ladestromversorgung angeordnet ist.

9. Mobiles Geräte-Energieversorgungscenter nach einem der vorstehenden Ansprüche, **dadurch gekennzeichnet, dass** die Deckenplatte (5) an das Gehäuse (2) angelenkt ist und vorzugsweise die der Schwenkachse ferne sich parallel zu der Schwenkachse erstreckende Seitenwand (4') zusammen mit der Deckenplatte (5) nach oben in mindestens eine stabile Lage schwenkbar ist.

10. Mobiles Geräte-Energieversorgungscenter nach einem der vorstehenden Ansprüche, **dadurch gekennzeichnet, dass** die Deckenplatte (5) gegenüber der Bodenplatte (3) geneigt angeordnet ist.

11. Mobiles Geräte-Energieversorgungscenter nach Anspruch 12, **dadurch gekennzeichnet, dass** sich die Neigung der Deckenplatte (5) beim Öffnen des Gehäuses (2) vergrößert.

12. Mobiles Geräte-Energieversorgungscenter nach Anspruch 12 oder 13, **dadurch gekennzeichnet, dass** die Bodenplatte (3) eine Rampe (23) aufweist, die in dem Innenraum (6) vor der Seitenwand (4") angeordnet ist, an der die geneigte Deckenplatte (5) den geringsten Abstand gegenüber der Bodenplatte (3) aufweist.

13. Mobiles Geräte-Energieversorgungscenter nach einem der vorstehenden Ansprüche, **dadurch gekennzeichnet, dass** die abnehmbare, verschiebbare bzw. verschwenkbare Seitenwand (4, 4', 4") und/oder Deckenplatte (5) mit dem Gehäuse (2) verriegelbar und abschließbar ist.

14. Mobiles Geräte-Energieversorgungscenter nach einem der vorstehenden Ansprüche, **dadurch gekennzeichnet, dass** das Gehäuse (2) ein oder mehrere Räder (25) aufweist.

15. Mobiles Geräte-Energieversorgungscenter nach einem der vorstehenden Ansprüche, **dadurch gekennzeichnet, dass** das Gehäuse (2) auf einem Fahrgestell angeordnet ist.
